# EUROPEAN PATENT APPLICATION

(11) **EP 4 686 192 A1**
(43) Date of publication of application: **28.01.2026**
(21) Application number: 23928637.0
(22) Date of filing: 22.03.2023
(51) Int. Cl.: H04N 7/18

(54) **MONITORING DEVICE AND PROGRAM FOR MONITORING DEVICE**

(71) Applicant: Optex Co., Ltd., Otsu-shi, Shiga 520-0101 (JP)
(72) Inventor: FUJIWARA, Kunio, Otsu-shi, Shiga 520-0101 (JP)
(74) Representative: Müller Hoffmann & Partner
(86) International application number: PCT/JP2023/011279
(87) International publication number: WO 2024/195057

(57) **Abstract**

To enable proper imaging of an object at night regardless of its position within the imaging area, the invention provides: a sensor module (10) that detects an object within a predetermined monitoring area (X); a camera module (20) including an infrared light source (21) that emits infrared light into the monitoring area (X), and an imaging means (22) that captures an image of the object irradiated with the infrared light; and a control module (30) that controls the sensor module (10) and the camera module (20); the control module (30) includes: a position calculation unit (32) that calculates position information indicating the detected position of the object based on a detection signal from the sensor module (10); and a light emission state control unit (33) that controls the emission state of the infrared light, based on the position information, to either a low output mode in which low-output infrared light is emitted, or a high output mode in which high-output infrared light is emitted.

## Description

### Technical Field

The present invention relates to a monitoring device and a program for a monitoring device, used for crime prevention.

### Background Art

As a conventional monitoring device, there is one disclosed in Patent Document 1, which includes an infrared sensor that detects intruders in a monitoring area and an image sensor that captures images of the detected intruders.

This image sensor employs an infrared light source that emits infrared light into the monitoring area so that the monitoring area can be imaged even at night.

However, if the output of the infrared light source is too high, halation may occur when imaging objects nearby, making it difficult for the monitoring device to capture images of the objects properly; on the other hand, if the output of the infrared light source is too low, insufficient illumination may cause images of distant objects to appear dark, also making it difficult to capture images of the objects properly.

Note that the above problem is not necessarily due only to the distance to the object; for example, if the object is at the edge of the imaging area rather than directly in front of the monitoring device, the amount of light reaching the object may be lower, which can also result in the same problem.

### Prior Art Documents

### Patent Documents

Patent Document 1: JP 2000-341675 A

### Summary of the Invention

### Problem to be Solved

The present invention has been made to solve the above problems, and its principal object is to enable proper imaging of an object at night, regardless of the object's position within the imaging area.

### Means of Solving the Problem

A monitoring device according to the present invention includes: a sensor module configured to detect an object within a predetermined monitoring area; a camera module including an infrared light source configured to emit infrared light into the monitoring area, and an imaging means for capturing an image of the object irradiated with the infrared light; and a control module configured to control the sensor module and the camera module, wherein wherein the control module comprises: a position calculation unit configured to calculate position information indicating a detected position of the object based on a detection signal from the sensor module, and a light emission state control unit configured to control the emission state of the infrared light to be a low output mode in which low-output infrared light is emitted, or be a high output mode in which high-output infrared light is emitted, based on the position information.

Via a monitoring device configured as described above, the emission state of the infrared light is controlled to be either the low output mode or the high output mode based on the position information indicating the detected position of an object. Therefore, infrared light in the low output mode can be irradiated on objects located in positions where halation is likely to occur, and infrared light in the high output mode can be irradiated on objects located in positions where light quantity may be insufficient.

As a result, proper imaging of an object can be achieved even at night, regardless of the object's position within the imaging area.

It is preferable that the sensor module is configured to emit light or radio waves into the monitoring area, and to detect the light or the radio waves reflected by the object that has entered the monitoring area.

This allows the present invention to be implemented as a LiDAR sensor or a RaDAR sensor.

It is preferable that the position information includes a detection distance to the object, and the light emission state control unit is configured to control the emission state to be the low output mode when the detection distance is short, and to control the emission state to be the high output mode when the detection distance is long.

With such a configuration, halation can be prevented by irradiating infrared light in the low output mode onto an object located nearby within the monitoring area, while sufficient light quantity can be ensured for an object located at a distance by irradiating infrared light in the high output mode. As a result, proper imaging of objects within the imaging area can be achieved regardless of the detection distance to the object.

It is preferable that the position information includes a detection angle of the object, and the light emission state control unit is configured to control the emission state to be the high output mode when the detection angle is large.

With such a configuration, sufficient light quantity can be ensured by irradiating an intruding object located on the wide-angle side of the monitoring device or of a particular infrared light source with infrared light in the high output mode. As a result, proper imaging of objects within the imaging area can be achieved regardless of the detection angle to the object.

It is preferable that the light emission state control unit controls the power supplied to the infrared light source to control the emission state to be the low output mode or to be the high output mode.

In this case, since both infrared light in a low output mode and infrared light in a high output mode can be emitted from a common infrared light source, the number of infrared light sources required can be reduced, thereby enabling cost reduction and compactness.

It is preferable that a plurality of the infrared light sources are included, one for the low output mode and one for the high output mode, and the light emission state control unit is configured to switch between the infrared light sources to control the emission state to be the low output mode or to be the high output mode.

This enables relatively easy switching of the emission state.

It is preferable that the imaging area of the camera module is divided into a plurality of sub-areas, and the infrared light sources are provided such that one corresponds to each of the sub-areas.

In this case, a wider area can be set as the monitoring area. Furthermore, it is sufficient to control only the infrared light source corresponding to the area into which the object has intruded, and thus, compared to a configuration in which the infrared light is controlled to be irradiated to the entire imaging area, power consumption can potentially be reduced.

It is preferable that the light emission state control unit is configured to switch the emission state of the infrared light source to a predetermined power saving mode during a period of time wherein no object has intruded into the monitoring area.

This enables reductions in power consumption.

It is preferable that an output level of the low output mode and an output level of the high output mode are manually adjustable.

Like this, the output of the infrared light source can finely tuned be according to the installation environment of the monitoring device, thereby improving usability.

It is preferable to further include a visible light source configured to emit visible light into the monitoring area, wherein the visible light from the visible light source is irradiated onto the object detected by the sensor module.

With such a configuration, by irradiating visible light onto an intruder in the monitoring area, the intruder can be intimidated or deterred.

It is preferable that the light emission state control unit is configured to control the emission state of the visible light based on the position information.

In this case, for example, by changing the blinking pattern of the visible light according to the detection distance of the object, it is possible to make an intruder believe that he is being tracked.

A program, according to the present invention, for a monitoring device that comprises a sensor module configured to detect an object within a predefined monitoring area; a camera module including an infrared light source for emitting infrared light into the monitoring area and an imaging means for capturing an image of the object irradiated with the infrared light; and a control module for controlling the sensor module and the camera module, causes the control module to function as: a position calculation unit configured to calculate position information indicating a detected position of the object based on a detection signal from the sensor module, and a light emission state control unit configured to control the emission state of the infrared light to be a low output mode or to be a high output mode, based on the position information.

According to the program for a monitoring device configured in this manner, it is possible to achieve the same effects as the monitoring device described above.

### Effect of the Invention

According to the present invention configured as described above, proper imaging of an object at night is enabled, regardless of the position of the object within the imaging area.

### Brief Description of the Drawings

Fig. 1: Schematic diagram showing the configuration of a monitoring device according to one embodiment of the present invention.
Fig. 2: Schematic diagram showing the monitoring area and imaging area in this embodiment.
Fig. 3: Functional block diagram showing the functions of the control module in this embodiment.
Fig. 4: Schematic diagram for explaining the low output mode in this embodiment.
Fig. 5: Schematic diagram for explaining the high output mode in this embodiment.
Fig. 6: Schematic diagram for explaining the initial settings in this embodiment.
Fig. 7: Flowchart showing the operation of the monitoring device in this embodiment.
Fig. 8: Flowchart showing the operation of the monitoring device in this embodiment.
Fig. 9: Schematic diagram of a monitoring device according to another embodiment.
Fig. 10: Functional block diagram showing functions of the control module in another embodiment.

### Mode for Carrying Out the Invention

A monitoring device according to one embodiment of the present invention will now be described with reference to the drawings. However, the present invention is not limited to the following description.

### [Overall Configuration of Monitoring Device 100]

The monitoring device of the present embodiment is used for security purposes in various facilities, such as office buildings, commercial facilities, airports, train stations, etc., and it detects intruders in a predefined indoor or outdoor monitoring area and captures images of such intruders.

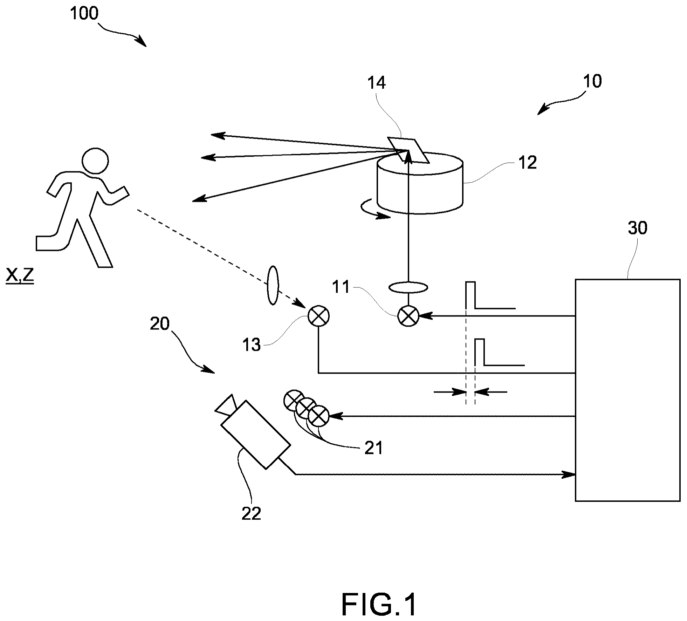

As shown in Fig. 1, the monitoring device 100 specifically includes a sensor module 10, a camera module 20, and a control module 30.

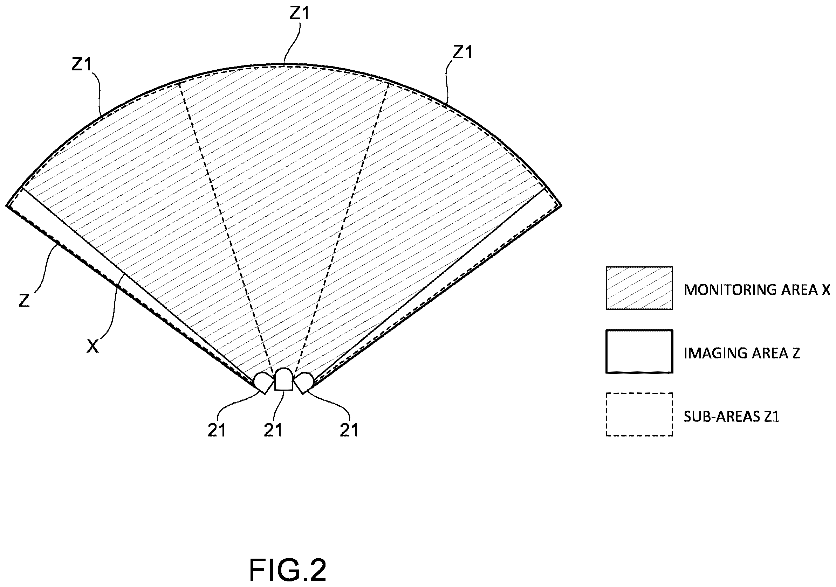

As shown in Fig. 1 and Fig. 2, the sensor module 10 detects objects present within a predefined monitoring area X; specifically, it is configured to detect objects that have entered the monitoring area X.

The sensor module 10 emits light or radio waves into the monitoring area X and detects the light or radio waves reflected by an object that has entered the monitoring area.

In the present embodiment, the sensor module 10 is a LiDAR sensor; specifically, as shown in Fig. 1, it includes a light source 11, a scanning mechanism 12 for scanning light emitted from the light source 11, and a photodetector 13 for receiving reflected light from an object located in the monitoring area X.

As shown in Fig. 1 and Fig. 2, the light source 11 emits light that is scanned along a two-dimensional plane defined as the monitoring area X. In the present embodiment, the light source 11 is a laser light source that emits pulses of laser light.

The scanning mechanism 12, as shown in Fig. 1 and Fig. 2, scans the light emitted from the light source 11 across the monitoring area X. In the present embodiment, as shown in Fig. 1, the scanning mechanism 12 includes a mirror 14 that reflects the light emitted from the light source 11 and the mirror 14 is rotated about a predetermined axis.

Explained more specifically, the mirror 14 is disposed at an angle with respect to the laser light emitted from the light source 11; by rotating this mirror 14 about a predetermined rotation axis, the laser light is scanned across the monitoring area X.

Alternatively, the scanning mechanism 12 may scan the light from the light source 11 across the monitoring area X by rotating the light source 11 itself about a predetermined rotation axis; in this case, the scanning mechanism 12 need not include the mirror 14. Moreover, the scanning mechanism 12 may also be implemented using a MEMS mirror.

As shown in Fig. 1 and Fig. 2, the photodetector 13 detects reflected light from objects in the monitoring area X and outputs a detection signal to the control module 30 (described later).

In the present embodiment, the photodetector 13 receives laser light and may be, for example, a photodiode such as an avalanche photodiode (APD). However, the photodetector 13 is not limited to this configuration and may, for example, be modified according to the type of light source 11. The photodetector 13 may instead be a configuration which detects the angle of arrival using multiple receiving antennas and determines the phase difference between each antenna.

In the sensor module 10 described above, in order to prevent existing objects such as buildings or trees within the monitoring area X from being falsely detected as intruding objects, detection signals output by the photodetector 13 during normal conditions (with no intruding objects) are acquired in advance and by comparing the normal conditions information indicated by the detection signal during normal conditions with the monitoring information indicated by the detection signals successively output from the photodetector 13 during monitoring, it is possible to determine whether an object has intruded into the monitoring area X.

As shown in Fig. 1 and Fig. 2, the camera module 20 captures images of objects within a imaging area Z set in advance; specifically, it is configured to capture images of objects that have intruded into the monitoring area X as described above. In this embodiment, as shown in Fig. 2, the imaging area Z is set slightly larger than the monitoring area X, although it is possible for its area to be smaller than the monitoring area X or for its area to coincide with the monitoring area X.

The camera module 20 continuously captures images of the monitoring area X regardless of whether an object is detected by the above-described sensor module 10. In other words, the camera module 20 captures video images of the monitoring area X, and the exposure time at each imaging timing is maintained at a constant value.

However, the camera module 20 may alternatively be configured to capture a still image of the monitoring area X when an intruding object is detected by the sensor module 10, or to acquire video images for a predetermined period following the detection timing.

The camera module 20 is configured to enable imaging of objects even in low-light conditions, such as at night; specifically, as shown in Fig. 1 and Fig. 2, it includes an infrared light source 21 that emits infrared light into the monitoring area X and an imaging means 22 for capturing images of objects illuminated by the infrared light.

In the present embodiment, as shown in Fig. 2, the imaging area Z of the camera module 20 is divided into a plurality of sub-areas Z1, and an infrared light source 21 is provided for each of the plurality of sub-areas Z1. Specifically, the imaging area Z comprises three sub-areas Z1, each of the sub-areas Z1 corresponding to one infrared light source 21.

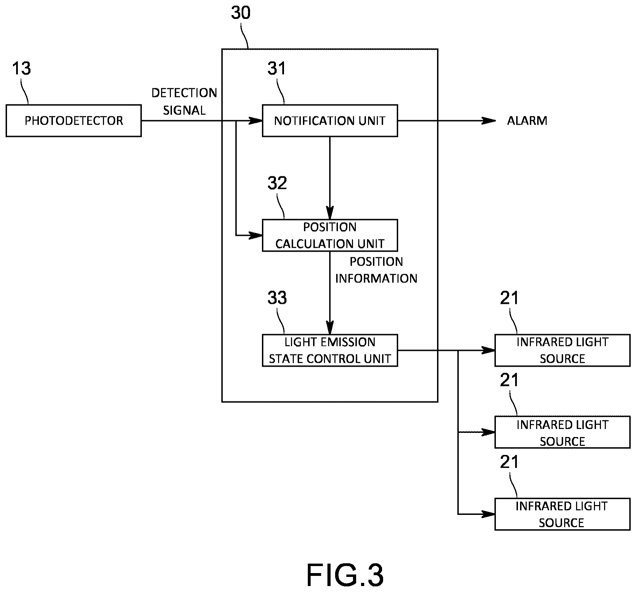

The control module 30 controls both the sensor module 10 and the camera module 20. Physically, the control module 30 includes a CPU, memory, and other components; functionally, the CPU and its peripherals operate according to a program for a monitoring device stored in the memory and, as shown in Fig. 3, the control module functions as a notification unit 31, a position calculation unit 32, and a light emission state control unit 33.

As shown in Fig. 3, the notification unit 31 acquires detection signals from the sensor module 10 and notifies the user when an object has intruded into the monitoring area X.

Specifically, the notification unit 31 compares the above-described normal conditions information stored in the memory with monitoring information represented by the detection signals sequentially sent from the sensor module 10 to determine whether or not an object has intruded into the monitoring area X.

The notification unit 31 may also be configured to send the captured video or still images obtained by the camera module 20 to the user upon notifying them of an intrusion of an object into the monitoring area.

As shown in Fig. 3, the position calculation unit 32 receives detection signals from the sensor module 10 and calculates position information indicating the detected position of an object based on these detection signal.

The position information is information indicating the coordinates of the detected position of the object, and includes the detection distance from the sensor module 10 to the object, as well as the detection angle to the object with respect to the sensor module 10.

In the present embodiment, the position calculation unit 32 is physically implemented as a TOF (Time of Flight) circuit or the like, and it measures the time it takes for a pulse of laser light to be emitted from the light source 11 and then for the laser light to be reflected by an object and then received, and calculates the distance to the detected object by converting the measured time into distance.

Furthermore, the position calculation unit 32 of the present embodiment determines the detection angle of the object based on the angle at which the photodetector 13 receives the reflected laser light.

As shown in FIG. 3, the light emission state control unit 33 controls a plurality of infrared light sources 21, and controls the emission state of the infrared light of each of the plurality of the infrared light sources 21. The emission state may include the intensity, the emission duration, or a blinking pattern, of the infrared light, and so on.

The light emission state control unit 33 obtains the position information calculated by the position calculation unit 32 and controls the emission state of the infrared light emitted from the infrared light source 21 based on that position information.

Specifically, the light emission state control unit 33 first identifies the infrared light to be controlled based on the detection angle included in the above-mentioned position information. In other words, the light emission state control unit 33 controls the light emission state of the infrared light irradiated to an object that has intruded the monitoring area X, identifies the infrared light source 21 that emits infrared light at the detection angle of the intruding object, and controls the emission state of the infrared light emitted from that infrared light source 21. However, the light emission state control unit 33 may be configured to simultaneously control the light emission states of the infrared light output from each of the plurality of infrared light sources 21.

Then, based on the position information, the light emission state control unit 33 controls the emission state of infrared light emitted from the infrared light source 21 to be either a low output mode, in which low-output infrared light is emitted, or a high output mode, in which high-output infrared light is emitted.

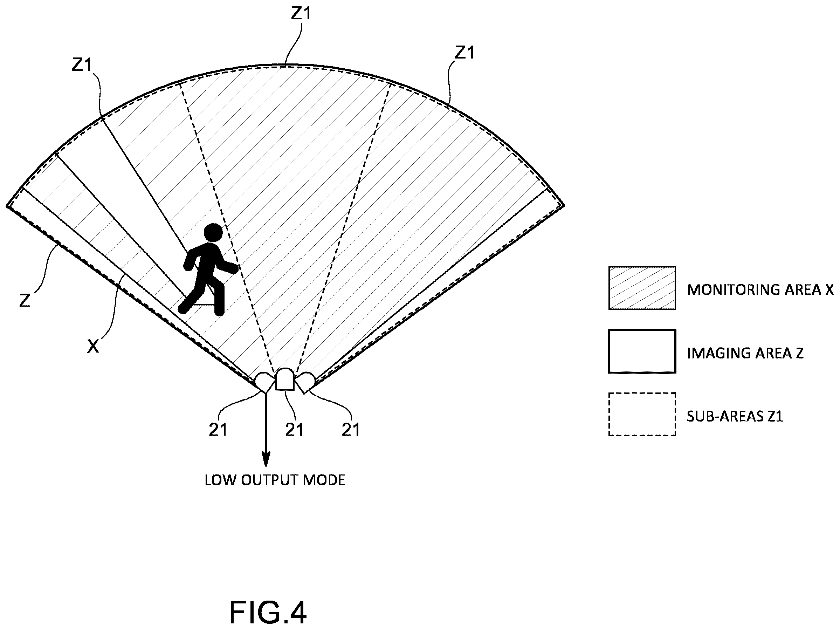

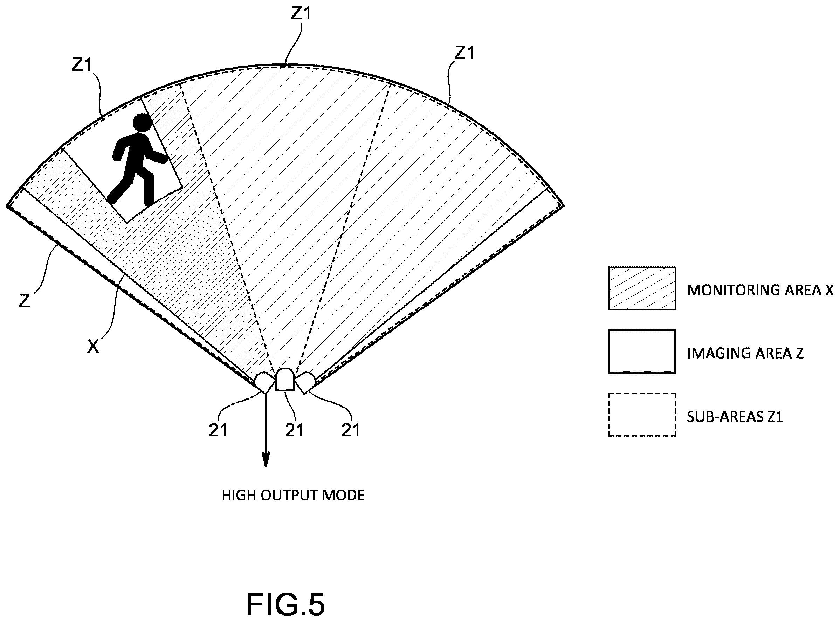

The light emission state control unit 33 controls the power supplied to the infrared light source 21, and controls the emission state to be the low output mode or the high output mode; for example, as shown in Fig. 4, the emission state is controlled to be the low output mode when the detection distance included in the position information is short, and as shown in FIG. 5, the emission state is controlled to be the high output mode when the detection distance is long.

In the present embodiment, the light emission state control unit 33 is configured to control the light emission state in stages between a low output mode and a high output mode, for example by switching the light emission states in five stages.

Specifically, the output levels are arranged in increasing order of output strength as follows: first low output mode, second low output mode, medium output mode, first high output mode, and second high output mode. The light emission state control unit 33 controls the emission state to be the first low output mode for detection distances shorter than a first distance; to be the second low output mode for detection distances between the first distance and a second distance; to be the medium output mode for detection distances between the second distance and a third distance; to be the first high output mode for detection distances between the third distance and a fourth distance; and to be the second high output mode for distances greater than the fourth distance. The first distance, the second distance, the third distance, and the fourth distance increase in distance in this order.

The output of the low output mode, the output of the medium output mode, and the output of the high output mode are each manually adjustable and may be set appropriately according to the installation environment of the monitoring device. The number of emission states is not limited to five and the number of stages may be increased or decreased as necessary.

As described above, the monitoring device 100 of the present embodiment is such that the camera module 20 continuously captures images of the monitoring area X, regardless of whether the sensor module 10 has detected an object; moreover, during night mode, the infrared light source 21 continuously emits infrared light.

Specifically, the monitoring device 100 includes an illuminance sensor (not shown), and switches to night mode when the detected illuminance level detected by the illuminance sensor falls below a threshold. In night mode, the infrared light source 21 continuously emits infrared light. It should be noted that switching to the night mode does not necessarily have to be performed using an illuminance sensor, and the light reception level when the camera module 20 is capturing a moving image or a still image may also be used.

More specifically, in the monitoring device 100, the emission state of infrared light in night mode is set with an initial setting, and more specifically, the emission state of each of the plurality of sub-area Z1 that make up the imaging area Z is set with an initial setting.

Specifically, the light emission state of each sub-area Z1 is set as an initial settings to one of the five stages of output mode described above, including the low output modes and the high output modes, based on the detection signal in the normal conditions as described above.

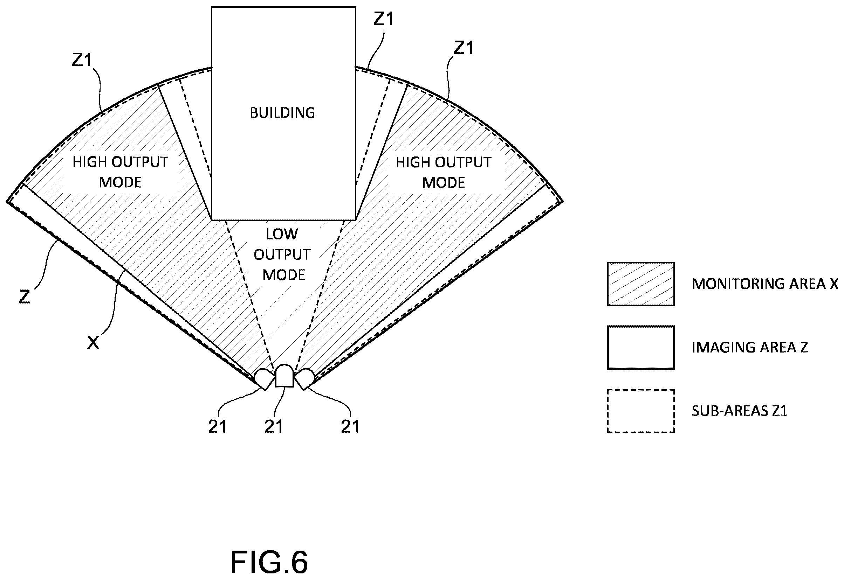

For example, as illustrated in Fig. 6, a sub-area Z1 with a clear view and few or no objects in the imaging area Z is initially set to high output mode, while a sub-area Z1 that includes the presence of an object, such as a building, nearby the monitoring device 100 in the imaging area Z is initially set to low output mode.

In such a configuration, continuing to emit high-output infrared light would result in increased power consumption, so the light emission state control unit 33 of the present embodiment is configured to switch the light emission state of some or all of the infrared light sources 21 to a predetermined power saving mode when no object has intruded into the monitoring area X.

Specifically, the light emission state control unit 33 may be configured to switch the infrared light sources 21 to the power saving mode after a predetermined period has elapsed if, for example, no object has intruded into the monitoring area X after the predetermined period has elapsed; the targets for switching to the power saving mode may be all of the infrared light sources 21, or may be only some of the infrared light sources 21 that are initially set to the high output mode.

This power saving mode is a mode in which the infrared light emission state is set to a lower output than the initially set output mode described above, and in this case, it is a mode in which the output is one stage lower or a plurality of stages lower than the initially set output mode out of the five stages of output mode described above.

### Operation of Monitoring Device 100

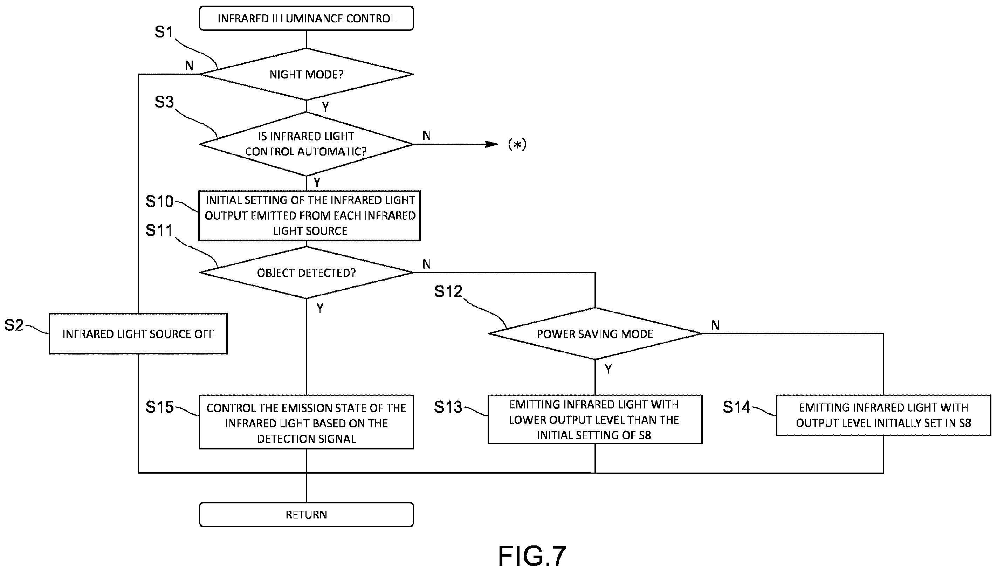

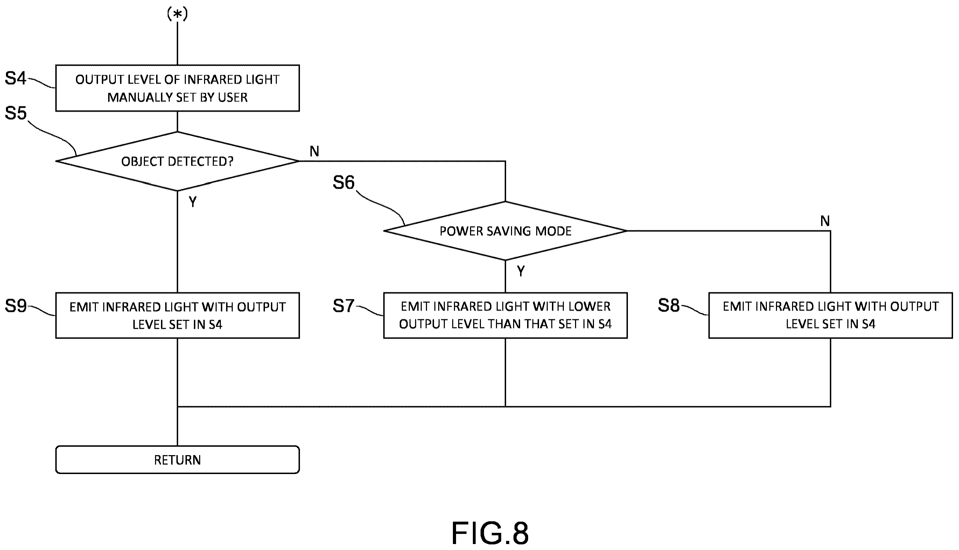

Next, the operation of the monitoring device 100 of the present embodiment performing detection and imaging of objects will be described with reference to the flowcharts shown in FIGS. 7 and 8.

First, when the monitoring operation by the monitoring device 100 is initiated, it is determined whether or not it is in the night mode (S1). Specifically, as described above, the detected illuminance level of the illuminance sensor is compared with a threshold value, and if the detected illuminance level is below the threshold value, the camera module 20 switches to night mode, and if the detected illuminance level exceeds the threshold value, the camera module 20 switches to day mode.

When the mode is switched to be the day mode in S1, an image is captured without emitting infrared light from the infrared light source 21, and the infrared light source 21 is turned off (S2).

On the other hand, when the mode is switched to the night mode in S1, infrared light is emitted from the infrared light source 21 to capture an image, and it is determined whether or not to automatically control the infrared light based on, for example, an input from a user (S3).

If, in S3, it is determined that the infrared light is not to be automatically controlled, the user manually sets the infrared light output, as shown in Fig. 8 (S4).

Thereafter, it is determined whether an object has been detected in the monitoring area X (S5).

If no object is detected in S5, it is determined whether to switch to the power saving mode, for example by checking whether a state in which no object intrusion is detected has continued for a predetermined period of time (S6).

If it is determined in S6 that the power saving mode should be switched to, the infrared light is set to an output level lower than the output level set in S4, and infrared light is emitted at that output level (S7).

On the other hand, if it is determined in S6 that the power saving mode should not be switched to, the infrared light is emitted at the output level set in S4 (S8).

Also, if an object is detected in S5, the infrared light is emitted at the output level manually set in S4 (S9).

Returning to Fig. 7, if it is determined in S3 that the infrared light should be automatically controlled, the initial settings for the plurality of sub-areas Z1 are made based on the detection signals during normal conditions (S10).

Thereafter, it is determined whether an object has been detected in the monitoring area X (S11).

If no object is detected in S11, it is determined, as in S6 above, whether to switch to the power saving mode (S12).

If it is determined in S12 that the power saving mode should be switched to, the infrared light is switched to an output mode lower than the initially set output mode in S10, and infrared light is emitted at that output level (S13).

On the other hand, if it is determined in S12 that the power saving mode should not be switched to, infrared light is emitted at the output level initially set in S10 (S14).

If an object is detected in S11, the light emission state control unit 33 controls the emission state of the infrared light based on the detection signal output from the sensor module 10 (S15).

Specifically, the light emission state control unit 33 controls the emission state to be the low output mode if the detection distance is short, and controls the emission state to be the high output mode if the detection distance is long; in this embodiment, the emission state is switched to one of the following in accordance with the detection distance: first low output mode, second low output mode, medium output mode, first high output mode, or second high output mode.

### Effect of the Present Embodiment

According to the monitoring device 100 configured as described above, the emission state of the infrared light is controlled to be either the low output mode or the high output mode based on the position information indicating the detected position of an object. Therefore, infrared light in the low output mode can be irradiated on objects located in positions where halation is likely to occur, and infrared light in the high output mode can be irradiated on objects located in positions where light quantity may be insufficient.

As a result, proper imaging of an object can be achieved even at night, regardless of the object's position within the imaging area Z.

In particular, in the monitoring device 100 of the present embodiment, since the camera module 20 acquires video images and the exposure time of the imaging means 22 is maintained constant at each imaging timing, controlling the emission state without controlling the exposure time enables prevention of halation even while capturing video images, which is of technical significance.

Moreover, because the sensor module 10 emits light into the monitoring area X and detects the light reflected from an object that has entered the monitoring area X, the present invention can be implemented as a LiDAR sensor.

Furthermore, since the light emission state control unit 33 controls the emission state to be the low output mode when the detection distance is short, and controls the emission state to be the high output mode when the detection distance is long, halation can be prevented when imaging nearby objects within the monitoring area X, and sufficient light quantity of infrared light can be ensured for objects located at a distance.

As a result, proper imaging of objects within the imaging area Z can be achieved regardless of the detection distance to the object.

In addition, since the light emission state control unit 33 controls the power supply to the infrared light source 21 to control the emission state, both the low output mode infrared light and the high output mode infrared light can be emitted from a common infrared light source 21; this makes it possible to reduce the number of infrared light sources 21 required, thereby achieving cost reduction and compactness.

Moreover, since the infrared light sources 21 are provided corresponding to each of the plurality of sub-areas Z1, it is possible to set a broader range as the monitoring area X. Furthermore, it is sufficient to control only the infrared light source 21 corresponding to the area into which the object has intruded, and thus, compared to a configuration in which the infrared light is controlled to be irradiated to the entire imaging area Z, power consumption can potentially be reduced.

Additionally, since the light emission state control unit 33 switches the emission state of the infrared light source 21 to the power saving mode while no object has intruded into the monitoring area X, a reduction in power consumption can be achieved.

Further, because the output level of the low output mode and the output level of the high output mode are manually adjustable, the output of the infrared light source 21 can be finely tuned according to the installation environment of the monitoring device 100, thereby improving usability.

### Other Embodiments

It should be noted that the present invention is not limited to the embodiment described above.

For example, while in the above embodiment, the light emission state control unit 33 controls the emission state in stages, it may instead be configured to continuously (i.e., not in stages) control the emission state between the low output mode and the high output mode based on the position information.

One example of such a light emission state control unit 33 is a configuration in which the output of the infrared light is calculated using a computation formula that includes the detection distance (included in the position information) as a parameter, and the infrared light source 21 is controlled to emit infrared light at that calculated output.

Alternatively, the light emission state control unit 33 may be configured to control the emission state based on the detection angle included in the position information; in one example of this configuration, when the detection angle is large, the emission state is controlled to be the high output mode. A large detection angle may refer to a case in which an object is detected at the edge (on the wide-angle side) of the entire monitoring area X, or an object is detected at the edge (on the wide-angle side) of one of the sub-areas Z1. That is, the detection angle may refer to the angle through the entire monitoring area X, or the angle within one sub-area Z1.

With such a configuration, sufficient light quantity can be ensured by irradiating an intruding object located on the wide-angle side of the monitoring device 100 or of a particular infrared light source 21 with infrared light in the high output mode. As a result, proper imaging of objects within the imaging area Z can be achieved regardless of the detection angle to the object.

Furthermore, the infrared light sources 21 may be provided separately for the low output mode and the high output mode. In this case, the light emission state control unit 33 may be configured to switch between the infrared light source 21 for the low output mode and the one for the high output mode, in order to control the emission state to the low output mode or the high output mode.

This enables relatively easy switching of the emission state.

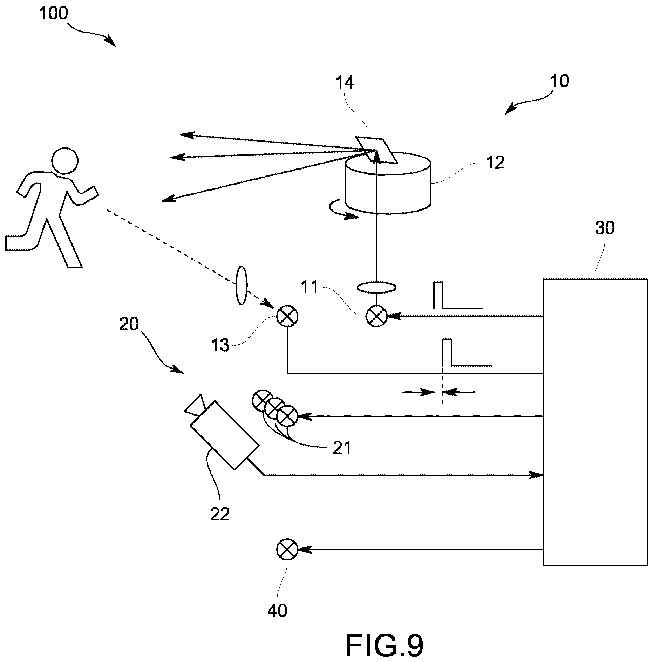

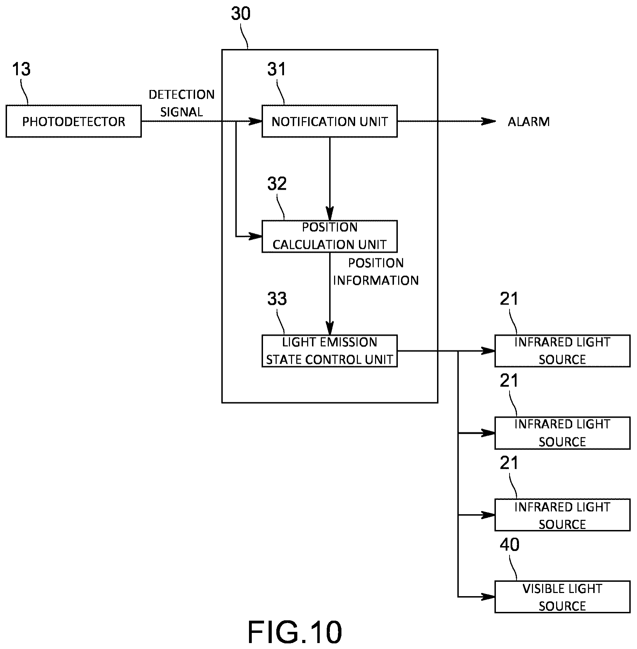

As the monitoring device 100 according to the present invention, as shown in Fig. 9 and Fig. 10, it is also possible to provide a visible light source 40 that emits visible light into the monitoring area X, wherein the visible light from the visible light source 40 is irradiated onto the object detected by the sensor module 10. A visible light source 40 may also be provided for each of the plurality of sub-areas Z1, in the same manner as the infrared light source 21.

With such a configuration, by irradiating visible light onto an intruder in the monitoring area X, the intruder can be intimidated or deterred.

In the above configuration, as shown in Fig. 10, the light emission state control unit 33 may also be configured to control the emission state of the visible light based on the position information.

An example of such a light emission state control unit 33 includes one that changes the blinking pattern of the visible light according to the detection distance included in the position information; specifically, slowing the blinking pattern of the visible light when the detection distance is long, and speeding up the blinking pattern of the visible light when the detection distance is short.

With such a configuration, the system can give the intruder the impression of being tracked, thereby enhancing the crime prevention function.

Additionally, the control module 30 may be provided with a function as a correction unit for adjusting settings to compensate for misalignment in the installation directions of the sensor module 10 and the camera module 20.

Specifically, the correction unit may accept an input angle range from the user, and based on that angle range, expand or narrow the monitoring area X or the imaging area Z, or change the orientation of the monitoring area X or the imaging area Z.

With such a configuration, when there is a discrepancy in the angle ranges of the monitoring area X and the imaging area Z, or when the orientations of the sensor module 10 and the camera module 20 differ, it is possible to adjust for such misalignments and acquire correct position information.

In the above embodiment, the sensor module 10 is a LiDAR sensor, but it may instead be configured to emit radio waves into the monitoring area X and detect the radio waves reflected back from an object that has entered the monitoring area X. This allows the present invention to be implemented as a RaDAR sensor.

Such a sensor module 10 may, for example, include an emitter that emits electromagnetic waves such as millimeter waves or microwaves, and the ranging method may be, for example, FMCW, and the angle detection method may be MIMO or a phased array system. In this case, the scanning mechanism 12 may be a mechanical scanning system or an electronic scanning system; a specific example of the electronic scanning system includes a configuration in which the signals from multiple receiving antennas are synthesized by changing their phase using hardware or software.

In the above embodiment, the camera module 20 includes an infrared light source 21 to enable imaging in low-light conditions, such as at night; however, it may instead be configured with an auxiliary light source that emits, for example, visible light or other auxiliary light for enabling imaging in low-light conditions, in place of the infrared light source 21.

In other words, the monitoring device according to the present invention may include: a sensor module for detecting an object within a predefined monitoring area; an auxiliary light source that emits auxiliary light for low-light conditions into the monitoring area; a camera module having imaging means for capturing images of the object irradiated with the auxiliary light; and a control module for controlling the sensor module and the camera module; the control module may be configured to include a position calculation unit for calculating position information indicating the detected position of the object based on the detection signal from the sensor module, and a light emission state control unit for controlling the emission state of the auxiliary light to a low output mode, in which low-output auxiliary light is emitted, or a high output mode, in which high-output auxiliary light is emitted, based on the position information.

It goes without saying that the present invention is not limited to the above embodiment and may be modified in various ways without departing from the spirit and scope of the invention.

### Industrial Applicability

According to the present invention, proper imaging of an object is enabled at night, regardless of the object's position within the imaging area.

### Explanation of Reference Numerals

100: monitoring device
10: sensor module
11: light source
12: scanning mechanism
13: photodetector
14: mirror
X: monitoring area
20: camera module
21: infrared light sources
22: imaging means
Z: imaging area
Z1: sub-area
30: control module
31: notification unit
32: position calculation unit
33: light emission state control unit

## Claims

1. A monitoring device comprising: a sensor module configured to detect an object within a predetermined monitoring area;
a camera module including an infrared light source configured to emit infrared light into the monitoring area, and an imaging means for capturing an image of the object irradiated with the infrared light;
and a control module configured to control the sensor module and the camera module, wherein
the control module comprises:
a position calculation unit configured to calculate position information indicating a detected position of the object based on a detection signal from the sensor module, and
a light emission state control unit configured to control the emission state of the infrared light to be a low output mode in which low-output infrared light is emitted, or be a high output mode in which high-output infrared light is emitted, based on the position information.

2. The monitoring device according to claim 1, wherein the sensor module is configured to emit light or radio waves into the monitoring area, and to detect the light or the radio waves reflected by the object that has entered the monitoring area.

3. The monitoring device according to claim 1, wherein the position information includes a detection distance to the object, and
the light emission state control unit is configured to control the emission state to be the low output mode when the detection distance is short, and to control the emission state to be the high output mode when the detection distance is long.

4. The monitoring device according to claim 1, wherein the position information includes a detection angle of the object, and
the light emission state control unit is configured to control the emission state to be the high output mode when the detection angle is large.

5. The monitoring device according to claim 1, wherein the light emission state control unit controls the power supplied to the infrared light source to control the emission state to be the low output mode or to be the high output mode.

6. The monitoring device according to claim 1, wherein a plurality of the infrared light sources are included, one for the low output mode and one for the high output mode, and
the light emission state control unit is configured to switch between the infrared light sources to control the emission state to be the low output mode or to be the high output mode.

7. The monitoring device according to claim 1, wherein the imaging area of the camera module is divided into a plurality of sub-areas, and the infrared light sources are provided such that one corresponds to each of the sub-areas.

8. The monitoring device according to claim 1, wherein the light emission state control unit is configured to switch the emission state of the infrared light source to a predetermined power saving mode during a period of time wherein no object has intruded into the monitoring area.

9. The monitoring device according to claim 1, wherein an output level of the low output mode and an output level of the high output mode are manually adjustable.

10. The monitoring device according to claim 1, further comprising a visible light source configured to emit visible light into the monitoring area, wherein
the visible light from the visible light source is irradiated onto the object detected by the sensor module.

11. The monitoring device according to claim 10, wherein the light emission state control unit is configured to control the emission state of the visible light based on the position information.

12. A program for a monitoring device that comprises a sensor module configured to detect an object within a predefined monitoring area; a camera module including an infrared light source for emitting infrared light into the monitoring area and an imaging means for capturing an image of the object irradiated with the infrared light; and a control module for controlling the sensor module and the camera module, wherein the program causes the control module to function as:
a position calculation unit configured to calculate position information indicating a detected position of the object based on a detection signal from the sensor module, and
a light emission state control unit configured to control the emission state of the infrared light to be a low output mode or to be a high output mode, based on the position information.
